# EUROPEAN PATENT APPLICATION

(11) **EP 1 619 832 A2**
(43) Date of publication of application: **25.01.2006**
(21) Application number: 05010658.2
(22) Date of filing: 17.05.2005
(51) Int. Cl.: H04L 12/28

(54) **Multicast and broadcast data transmission in a short-range wireless communications network**

(30) Priority: 20.07.2004 US 893877
(71) Applicant: Nokia Corporation, 02150 Espoo (FI)
(72) Inventor: Palin, Arto, 37830 Viiala (FI); Ruuska, Päivi M., 33720 Tampere (FI)
(74) Representative: Becker Kurig Straus

(57) **Abstract**

Disclosed herein are techniques for the distribution of data to multiple devices in wireless networks, such as Bluetooth networks. This data may be unicast, multicast, or broadcast in nature. Designations, such as reserved addresses are used to indicate whether devices are transmitting multicast or broadcast data. These devices may be slave devices that rely on a master device to forward their transmissions to multiple devices.

## Description

### FIELD OF THE INVENTION

The present invention relates to wireless communications. More particularly, the present invention relates to the transmission of data to multiple devices in a wireless communications network.

### BACKGROUND OF THE INVENTION

Various short-range wireless communications systems allow devices to join ad hoc networks and participate in various applications and services. For example, device users may obtain Internet connectivity through an access point, or engage in multiplayer games with other device users.

Bluetooth is a system that enables wireless communications devices to request and receive resources from servers. Bluetooth defines a short-range radio network, originally intended as a cable replacement. It can be used to create ad hoc networks of up to eight devices, where one device is referred to as a master device. The other devices are referred to as slave devices. The slave devices can communicate with the master device and with each other via the master device. The Bluetooth Special Interest Group, Specification of The Bluetooth System: Version 1.2, November 5, 2003, describes the principles of Bluetooth device operation and communication protocols. This document is incorporated herein by reference in its entirety. The devices operate in the 2.4 GHz radio band reserved for general use by Industrial, Scientific, and Medical (ISM) applications. Bluetooth devices are designed to find other Bluetooth devices within their communications range and to discover what services they offer. Other short-range networks also exist. Examples of such networks include wireless local area networks (WLANs), such as IEEE 802.11 and HIPERLAN.

User applications that require multicast and/or broadcast transmission techniques are becoming increasingly common. For instance, multiplayer games often require data originated by a single device to be concurrently (or almost concurrently) sent to multiple devices. Also, in such applications, which may involve real time gaming environments, it is desirable to provide small latencies in the delivery of data.

Currently, Bluetooth provides for both point-to-point transmissions, and broadcast transmissions that are sent from a master device to all of its slave devices. These transmissions types do not provide for the simultaneous reliable flow of data to multiple slave devices. Moreover, these transmission techniques do not provide for slave devices to send data for forwarding by a master device to multiple slave devices in an efficient manner with small latency.

General ideas relating to multicasting have been proposed to the Bluetooth Special Interest Group (SIG). Unfortunately, these ideas were assigned a low priority. Accordingly, there is a need to provide enhancements for the transmission of data to multiple devices in short-range wireless communications networks, such as Bluetooth.

### SUMMARY OF THE INVENTION

The present invention provides techniques for the distribution of data to multiple devices in wireless networks, such as Bluetooth networks. This data may be unicast, multicast, or broadcast in nature. Designations, such as reserved addresses are used to indicate whether devices are transmitting multicast or broadcast data. These devices may be slave devices that rely on a master device to forward their transmissions to multiple devices. Such transmissions may be related to applications, such as multiplayer games.

Accordingly, the present invention provides a method, apparatus, and computer program product that establishes a short-range wireless communications network having multiple slave devices and a master device that controls operations of the short-range wireless communications network. The method, apparatus, and computer program product initiate a multicast group including at least two slave devices of the multiple slave devices. An address is reserved for multicast communications within the multicast group. Multicast data is sent to the at least two slave devices using the reserved address; and an acknowledgement of received multicast data from at least one of the at least two slave devices is received. The acknowledgement includes an indication that the at least one device has data to transmit. In addition, the method, apparatus, and computer program product receive data from the at least one slave device. This received data includes a destination indicator.

The present invention also provides a method, apparatus, and computer program product that receives a multicast transmission from a master device, in which the multicast transmission includes data and a multicast address corresponding to a multicast group in the short-range wireless communications network. The multicast group includes at least two slave devices of the multiple slave devices. In addition, the method, system, and computer program product sends in response to the multicast transmission an acknowledgment indicating that there is data to transmit to the master device; receives a polling transmission from the master device; and transmits to the master device the data indicated in the acknowledgment and a destination indicator.

Moreover, the present invention provides a method, apparatus, and computer program product that receives a polling transmission from a master device; and transmits data and a destination indicator to the master device. The destination indicator indicates that the data is to be forwarded to all devices in the short-range wireless communications network.

Also, the present invention provides for transmitting a polling transmission to at least one slave device; receiving data and a destination indicator from the at least one slave device; and forward the received data to a plurality of devices across a short-range wireless communications network based on the destination indicator information without circulating the data to the device application layer.

In addition, the present invention provides an apparatus for multiplayer gaming. This apparatus includes a transceiver that communicates multiplayer gaming information with one or more remote devices playing a multiplayer game across a short-range wireless communications network, a memory for storing multiplayer gaming instructions, and a processor. The processor executes the multiplayer gaming instructions stored in the memory for running the multiplayer game at the application layer. In addition, the processor executes instructions for: transmitting a polling transmission to at least one slave device playing the multiplayer game for receiving multiplayer gaming data; receiving the multiplayer gaming data and a destination indicator from the at least one slave device; and forwarding the received multiplayer gaming data to a plurality of remote devices playing the multiplayer game across the short-range wireless communications network based on the destination indicator information without circulating the data to the application layer.

Further features and advantages of the present invention will become apparent from the following description and accompanying drawings.

### BRIEF DESCRIPTION OF THE DRAWINGS

In the drawings, like reference numbers generally indicate identical, functionally similar, and/or structurally similar elements. The drawing in which an element first appears is indicated by the leftmost digit(s) in the reference number. The present invention will be described with reference to the accompanying drawings, wherein:

FIG. I is a diagram of an operational environment, according to an embodiment of the present invention;

FIG. 2 is a diagram showing the sequence of transmissions between devices in a short-range wireless communications network;

FIGs. 3A, 3B, and 3C are flowcharts of communication operations according to embodiments of the present invention;

FIGs. 4A and 4B are diagrams of exemplary acknowledgment packet formats according to embodiments of the present invention;

FIG. 5 is a diagram of an exemplary data packet format, according to embodiments of the present invention;

FIG. 6 is a diagram of an exemplary multiplayer gaming environment;

FIG. 7 is a diagram of an exemplary device architecture according to embodiments of the present invention;

FIG. 8 is a diagram of a wireless communications device implementation according to embodiments of the present invention;

FIGs. 9A and 9B are protocol layer diagrams illustrating data routing according to embodiments of the present invention; and

FIG. 10 is a diagram illustrating exemplary interactions between a master device and a slave device according to techniques of the present invention.

### DETAILED DESCRIPTION OF THE PREFERRED EMBODIMENTS

### I. Operational Environment

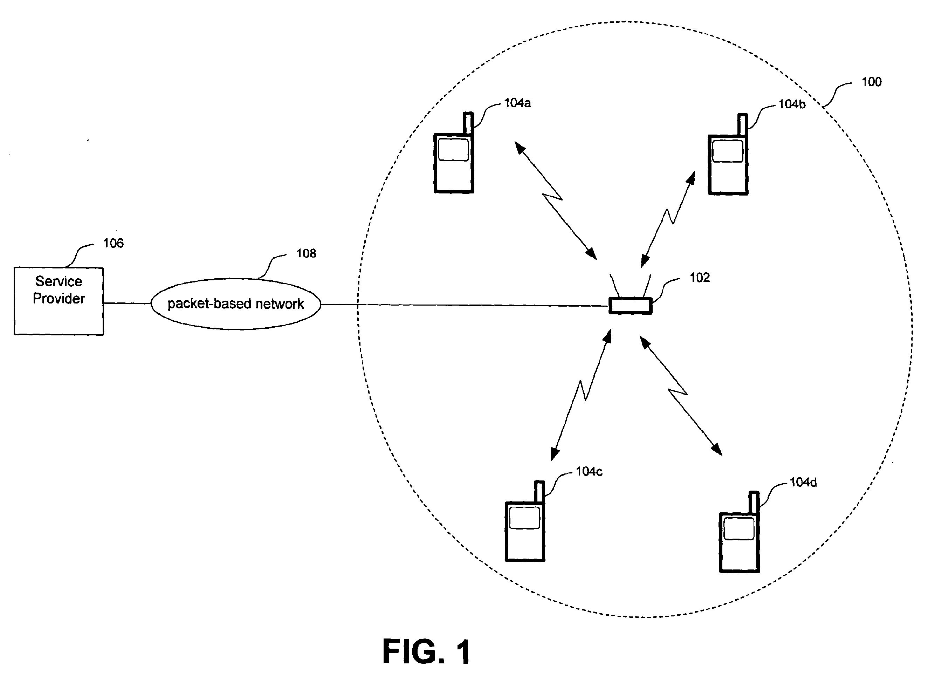

Before describing the invention in detail, it is helpful to first describe an environment in which the invention may be employed. Accordingly, FIG. 1 is a diagram of an operational environment, according to an embodiment of the present invention. This environment includes a short-range wireless network 100 having multiple wireless communications devices (WCDs). Network 100 may be a Bluetooth network, or other type of wireless network.

As shown in FIG. 1, network 100 includes a master WCD 102 and four slave WCDs 104. Each of the devices in network 100 may be portable or fixed. For instance, FIG. 1 shows master WCD 102 as a fixed access point, and slave WCDs 104 as portable devices. Examples of portable devices include wireless telephones, personal digital assistants (PDAs), laptop computers, and the like.

As shown in FIG.1, WCD 102 is connected to a service provider 106 through a packet-based network 108 (such as the Internet). Service provider 106 may offer various services to devices 104, such as multiplayer games and content.

In a short-range communications network, such as a Bluetooth network, a master device will transmit to and receive from each of the slave devices. These slave devices are each assigned a particular address. In Bluetooth version 1.1, this address was called an active member (AM) address, while in Bluetooth version 1.2, this address is called a logical transport (LT) address. If the master device has no data to transmit to a particular slave device, it may either skip that slave device or transmit a NULL packet.

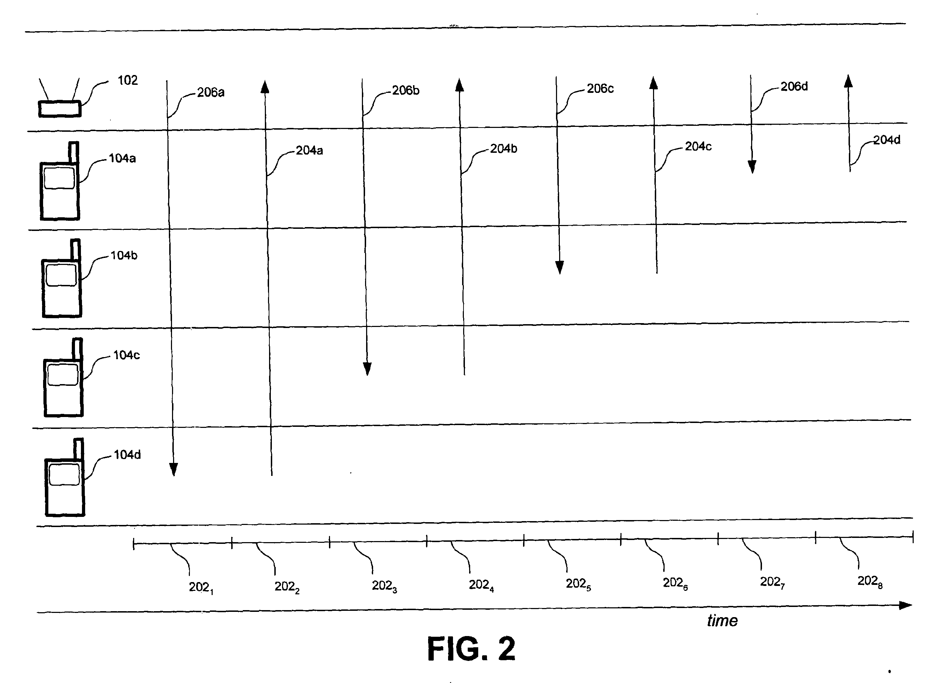

The exchange of transmissions between a master and slave devices may be in a particular order. For instance, FIG. 2 is a diagram showing the sequence of transmissions between the devices of FIG. 1. This diagram shows the exchange of information according to a predetermined repeating sequence. This sequence occurs over a plurality of time slots 202 in which WCD 102 exchanges information with WCDs 104.

In the exchange of FIG. 2, WCD 102 transmits on even-numbered slots and WCDs 104 reply on odd-numbered slots. In particular, WCDs 104 only transmit in response to transmissions from the WCD 102. For instance, FIG. 2 shows WCDs 104 sending transmissions 204 (e.g., packets). These transmissions are in response to transmissions 206, which are sent by WCD 102. Each of transmissions 206 are addressed to a particular one of WCDs 104.

Currently in Bluetooth, transmissions 204 need to be addressed to a single particular device, such as WCD 102. This is because Bluetooth does not provide for a transmission to be directed to a particular group of devices (e.g., multicasting). Accordingly, any such feature directing data to multiple devices would have to be implemented at the application layer.

In embodiments of the present invention, multicast data is indicated (in the master device to slave device direction, and also in the slave device to master device direction) at the Bluetooth baseband level. This feature advantageously provides for multicast transmissions originated by slave devices to be redirected to other devices in the pertinent multicast group by the master device without requiring the master device to circulate the data to the application or network layer. This advantageously reduces processing latencies in forwarding data to its destination devices.

This feature of the present invention is provided through the ability to create a Multicast User Group (MUG) having a master device and multiple slave devices. In addition, the MUG is allocated an address that indicates multiple devices. This address is referred to herein as a MUG address. In Bluetooth implementations, this address is an AM address (or an LT address). In addition to accepting packets that are specifically addressed to them, slave devices in a MUG also accept packets that indicate the MUG as its destination address.

Accordingly, for each MUG in a Bluetooth network, there is a reduction in the number of possible active slave devices. For instance, in a piconet having a single MUG, a maximum number of six active slave devices are possible, because one of the seven available addresses is reserved for the MUG.

In addition to multicasting, inventive features of the present invention also apply to broadcasting techniques. According to such techniques, a slave device may instruct its master device to broadcast the slave device's data to every device in the short-range network or piconet.

In embodiments, this feature is provided through the use of a broadcast indicator. This indicator may be an address, such as an LT address. For instance, an LT address of "000" may be reserved for broadcasting. When a master device receives a polling response containing such an indicator, the master device broadcasts the accompanying data to every device in the piconet. This broadcasting may be performed by the master device immediately upon receiving the data with a dedicated destination indicator. Such features are described in greater detail below.

### II. Operation

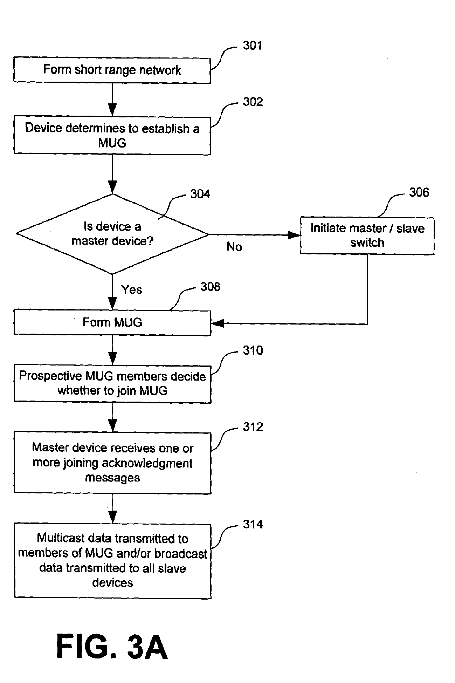

FIG. 3A is a flowchart showing an operation according to embodiments of the present invention. As shown in FIG. 3A, this operation includes a step 301, in which a short-range wireless communications network is formed among a plurality of devices. This wireless communications network includes a master device and multiple slave devices. Accordingly, this network may be a Bluetooth network.

In a step 302, a device in the network decides to establish a MUG. As indicated by a step 304, if this device is currently a slave device, then it initiates a master/slave switch in a step 306.

In a step 308, a MUG is formed (or "set up"). This involves the master device sending a MUG joining request individually to each prospective MUG member in the short-range network. These prospective members are slave devices. This request may include multicast address (i.e., an LT address) that is allocated to the MUG. Such an address is referred to herein as a "MUG address".

In a step 310, each of the prospective MUG members individually decides whether to join the MUG. If a prospective member decides to join, then it sends a joining acknowledgement message to the master. Accordingly, the master device may receive one or more joining acknowledgement messages from prospective MUG members in a step 312.

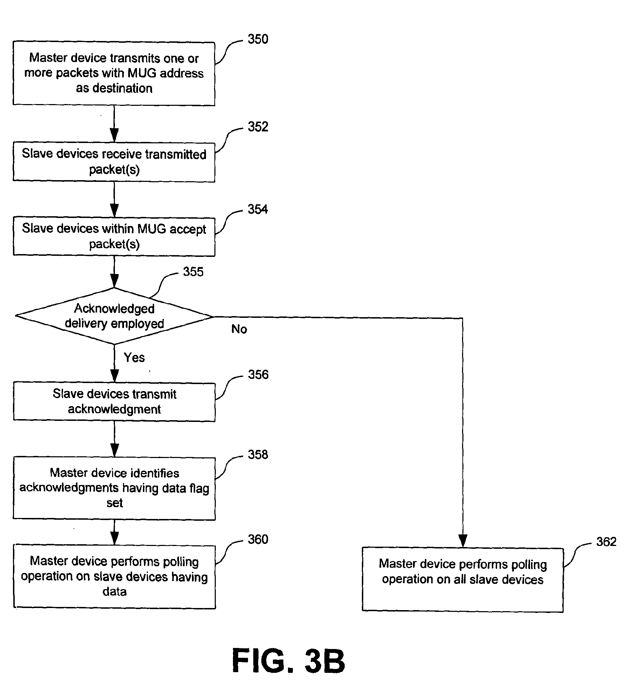

After the multicast group has been set up, operation proceeds to a step 314. In this step, multicast data may be transmitted to members of the MUG and/or broadcast data may be transmitted to all slave devices in the short-range wireless communications network. The multicast data may include data originated by the master device. Moreover, in embodiments of the present invention, the multicast data may include data originated by slave device(s) in the MUG. The master device is required to forward such data to other devices in the MUG. An example of such data transfer is described with reference to FIG. 3B.

FIG. 3B is a flowchart illustrating an operation of data transfer according to embodiments of the present invention. This operation includes a step 350, in which the master device transmits one or more data packets having the MUG address as its destination address (i.e., a destination LT address).

The slave devices in the network receive these packets (similar to the receipt of broadcast packets) in a step 352. However, as shown by a step 354, only the slave devices in the MUG accept these packets, because the packets indicate the MUG address as their destination.

Multicast data may be delivered in either an unacknowledged or an acknowledged manner. When unacknowledged delivery is employed, the slave devices are not required to acknowledge receipt of multicast data. However, when acknowledged delivery is employed, the slave devices acknowledge receipt to the master device. Such acknowledgements may also be used for slave devices to initiate the transmission of their own multicast or unicast data to the other device(s) in the MUG.

Accordingly, as indicated by a step 355, when acknowledged delivery is employed, operation proceeds to a step 356. However, when unacknowledged delivery is employed, operation proceeds to a step 362.

In step 356, each slave device in the MUG transmits an acknowledgment to the master device. Performance of step 356 differs from typical acknowledgement procedures because all of the MUG members cannot respond at the same time. Therefore, in embodiments of the present invention, all of the slave devices will transmit acknowledgements (ACKs) one after the other in a predetermined sequence. In Bluetooth implementations, these ACKs may be in the form of packets that are transmitted in master-to-slave slots, if needed. For example, short ACK packets may be employed so that two can be transmitted in a single time slot. However, various ACK packet sizes may be employed, such as ones that require a single time slot for transmission and ones in which more than two can be transmitted in a single time slot.

In embodiments, each acknowledgment may include a flag (referred to herein as a data flag) that the slave device can set to indicate that it has data to transmit. This data may be unicast data directed to the master device or multicast data directed to the MUG. In addition, this data may be broadcast data directed to all devices in the short-range wireless communications network. If the flag indicates that the slave has data, the master device will subsequently poll the slave device.

The master device receives the ACKs in a step 358. In this step, the master device identifies each acknowledgment having a data flag that is set. From this identification, the master device determines which devices (if any) have data (e.g., multicast data, unicast data, or broadcast data) to transmit.

In a step 360, the master device performs a polling operation in which it receives data from each of the slave devices having data. Any multicast data will be identified by the originating slave device sending the data with the MUG LT address. If this data is multicast, the master device transmits it to the slave devices in the MUG. However, any unicast data will be identified by the originating slave device sending the data with its own LT address. Moreover, any broadcast data will be identified by the originating slave device sending the data with a broadcast identifier as its LT address (e.g., "000").

As described above, a step 362 is performed when the unacknowledged delivery is employed. In this step the master device polls all slave devices in the network. This step may be performed periodically, for example, at predetermined intervals.

In alternate embodiments, steps 350 and 354 may involve broadcast transmission instead of multicast transmission. For instance, in step 350 the master device may transmit one or more packets with a broadcast address (e.g., an LT address of "000") to all of the slave devices in the network. Also, in step 354, all of the slave devices in the network may accept the packet(s).

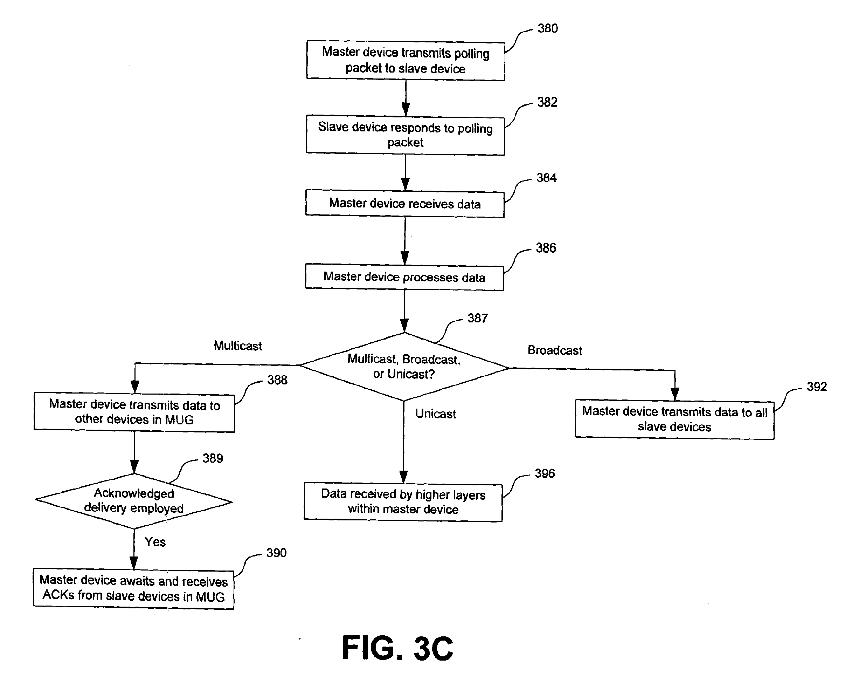

Steps 360 and 362 both involve polling operations. Therefore, an example of such polling operations is described with reference to FIG. 3C. In particular, FIG. 3C is a flowchart illustrating an exemplary polling interaction between a master device and a particular slave device according to embodiments of the present invention. This exemplary interaction may involve the transmission of multicast data or broadcast data (either acknowledged or unacknowledged multicast delivery). Also, this exemplary interaction may involve the transmission of unicast data from the slave device to the master device.

This interaction includes a step 380, in which the master device transmits a polling packet to the slave device. In a step 382, the slave device responds to this polling packet with data and a defined destination indicator. The destination indicator informs the master to process and possibly forward the data to intended recipients without requiring the master device to circulate the data to the application layer.

In embodiments of the present invention, the responding slave device may use the MUG address (i.e., LT address) as the destination indicator if the data is multicast data. However, if the data is broadcast data, the responding slave device uses another type of indicator (such as a broadcast LT address) for informing the master device that the data is to be broadcast to all slave devices in the wireless network. Otherwise, if the data is unicast data directed to the master device, the slave device uses its own LT address. It should be noted that the present invention is not intended to be limited to any specific address as the destination indicator. Therefore ,other kinds of addresses can also be used as destination indicators, depending on particular embodiments of the present invention.

In a step 384, the master device receives the data from the slave device. An optional step 386 may be performed after step 384. In this step, the master device circulates the received data to a certain level (i.e., a certain protocol layer) for processing. This processing includes, for example, any required decryption. However, the master device does not need to push this data up to application layer to determine that it is multicast, broadcast, or unicast data.

In a step 387, the master device determines the type of data (e.g., multicast, broadcast, or unicast) transmitted by the slave device. In embodiments, this determination is based on the destination indicator (e.g., LT address) employed by the slave device. As shown in FIG. 3C, operation proceeds to a step 388 when it is determined that the data is multicast. When it is determined that the data is broadcast, operation proceeds to a step 392. However, when it is determined that the data is unicast, operation proceeds to a step 396.

In step 388, the master device transmits the multicast data to other devices in the MUG. As indicated by a step 389, an optional step 390 is performed when acknowledged delivery is employed. In this step, the master device awaits and receives ACKs from the slave devices in the MUG. However, in embodiments, the slave device that originated the data will not necessarily transmit an ACK because it doesn't need to receive its own data (if it knows that it will be its own data). Accordingly, the master device will not necessarily await an ACK from this device.

In step 392, the master device transmits the received broadcast data to all slave devices in the network.

In step 396, the unicast data is received by higher layer process(es) (e.g., user applications) within the master device. Accordingly, this step may involve storing the data and/or processing it according to these higher layer process(es).

The operations of FIGs. 3A, 3B, and 3C are provided as an example, and not in limitation. Accordingly, variations to these operations, such as the addition of steps, the removal of steps, and changes in their order of performance, are within the scope of the present invention. III. Paging and Authentication

As described above with reference to FIG. 3A, multiple devices may form a short-range wireless communications network in step 301. In Bluetooth implementations, this network includes a master device and multiple slave devices. Accordingly, step 301 may include a paging process performed between the master device and each slave device. Upon successful completion, the paging process results in an unsecured connection being established between these devices. Bluetooth paging involves the exchange of various information between the initiating device (which is in a paging state) and the remote device (which is in a page scan state).

More particularly, the initiating device enters the paging state and transmits one or more paging packets. Each of these paging packets includes an identification number based on the address of the remote device. Meanwhile, the remote device (which is in the page scan state) responds to the paging packets by transmitting a packet containing its address.

The initiating device receives this packet from the remote device. In response, the initiating device transmits a frequency hop synchronization (FHS) packet. The FHS packet is used to pass information that allows the remote device to synchronize with the frequency hopping sequence of the initiating device. Upon receipt of this FHS packet, the remote device transmits a further packet to confirm receipt of the FHS packet.

At this point, a Bluetooth link is formed between the initiating device and the remote device. Accordingly, both devices enter into a connection state. In the connection state, the initiating device operates as a master device and the remote device operates as a slave device. Thus, the remote device employs the timing and frequency hopping sequence of the initiating device. Additionally, the initiating device transmits a packet to verify that a link has been set up. The remote device confirms this link by sending a packet to the initiating device.

In addition, step 301 may include an authentication process performed between the master device and each slave device. Authentication is a process where two devices verify that they both have the same secret key. This secret key can then be used to implement security features, such as link encryption.

### IV. Packet Formats

As described above, slave devices may transmit acknowledgments (or ACKs) in response to multicast data transmitted from a master device. For instance, in step 356 of FIG. 3B, each slave device in a particular MUG transmits an acknowledgment to the master device.

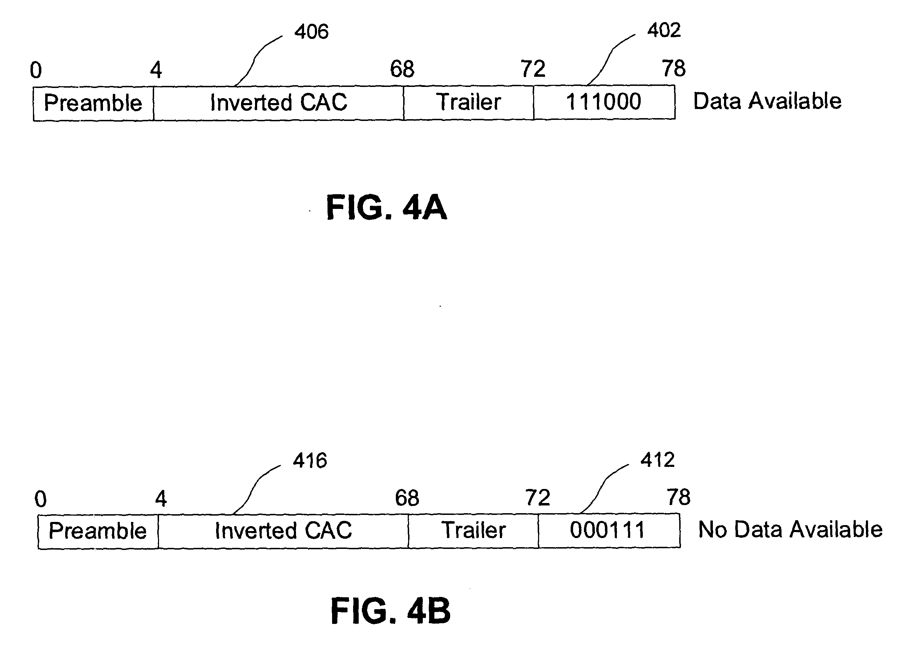

Accordingly, FIGs. 4A and 4B are diagrams of exemplary ACK packet formats that may be used in Bluetooth implementations. FIG. 4A shows an ACK packet, which indicates the slave device has data available. This indication is provided by a designated bit code 402. As shown in FIG. 4A, this designated code is "111000". However, other codes may be employed. Also, the ACK packet of FIG. 4A includes an inverted Channel Access Code (CAC) 406. This inverted code is used to prevent other slave devices in the wireless network that do not belong to the multicast group from recognizing the packet and synchronizing with it.

FIG. 4B is an ACK packet, which indicates the slave device has no data available. This indication is provided by a designated bit code 412. As shown in FIG. 4B, this designated code is "000111". However, other codes may be employed. Like the packet of FIG. 4A, the packet of FIG. 4B includes an inverted Channel Access Code (CAC) 416 to prevent other slave devices in the wireless network that do not belong to the multicast group from recognizing the packet and synchronizing with it.

The packet formats presented in FIGs. 4A and 4B are provided as examples of possible packet formats that can be used to indicate that a slave device has data to transmit. Accordingly, it should be noted that also other types and formats of ACK packets may be used that are within the scope of the present invention.

As described above, slave devices may transmit data packets. For instance, in step 382 of FIG. 3C, a slave device may responds to master device polling with data and a defined destination indicator.

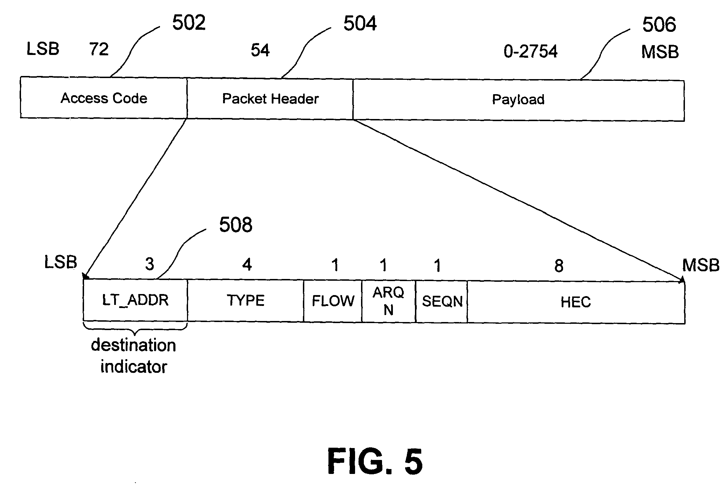

FIG. 5 is a diagram of an exemplary data packet, which may be transmitted according to the techniques of the present invention. This packet includes an access code 502, a packet header 504, and a payload 506. As shown in FIG. 5, packet header 504 includes various fields. One of these fields is LT address (LT_ADDR) field 508. This field is a destination indicator, which indicates the type of transmission (e.g., unicast, multicast, or broadcast) associated with the data packet. Packet header 504 employs 1/3 forward error correction (FEC) encoding.

The packet format of FIG. 5 is provided as an example. Accordingly other formats and types may be employed for the transmission of data. Such alternative formats and types are within the scope of the present invention.

### V. Wireless Multiplayer Gaming

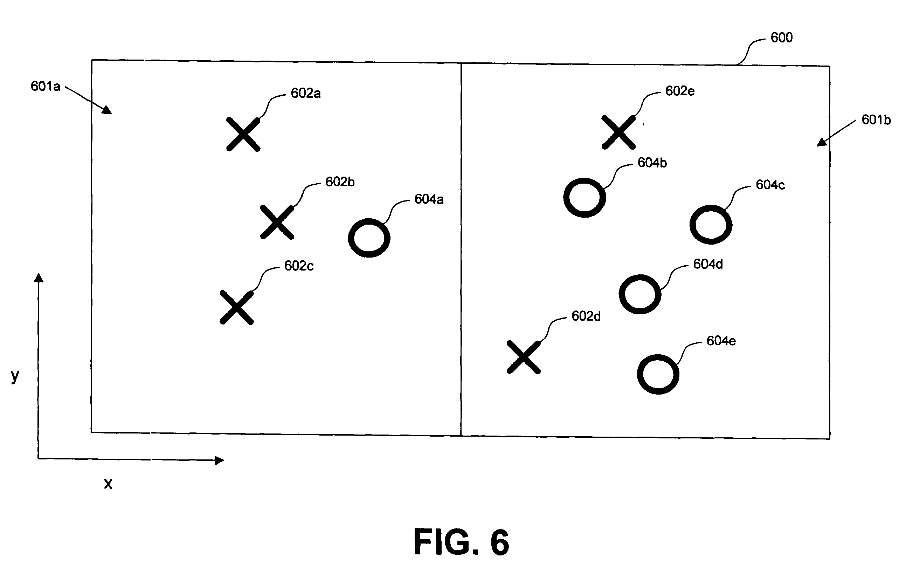

FIG. 6 is a diagram of an exemplary multiplayer gaming environment. This environment includes a virtual space 600 having subspaces 601a and 601b. Virtual space 600 represents a physical area, such as a sports playing field. However, virtual space 600 may represent other physical areas, such as a battlefield, or a building. Subspaces 601 represent portions of virtual space 600. For example, subspaces 601 may represent zones or regions on a playing field, occupied territories on a battlefield, or rooms in a building.

As shown in FIG. 6, the interactive environment includes participants 602a-e and 604a-e. In this environment, participants 602 belong to a first team, and participants 604 belong to a second team. Each of these participants has a position within virtual space 600. This position is based on a coordinate system, such as the rectangular (i.e., x-y) coordinate system shown in FIG. 6. From this coordinate system, distances between objects may be determined.

The environment of FIG. 6 is dynamic. Therefore, the positions of participants 602 and 604 may change over time. In addition, the characteristics of virtual spaces 600 and 601 a-b may also change in time. Such changes may involve the size, shape and orientation of these spaces. Although FIG. 6, is a diagram of a two-dimensional physical space, virtual environments may represent other dimensional (e.g., 3-D) spaces.

For the environment of FIG. 6 to be presented to device users as realistic and stimulating, information regarding the present state of the environment's characteristics needs to be distributed to each device in a quick and relatively concurrent manner. For example, players belonging to the same team could establish their own multicast groups within which they can communicate and make strategic decisions. Also, certain messages may be broadcast to all players to convey information regarding various events that occur during game-play. Accordingly, the techniques of the present invention provide mechanisms for such distribution.

### VI. Wireless Communications Device

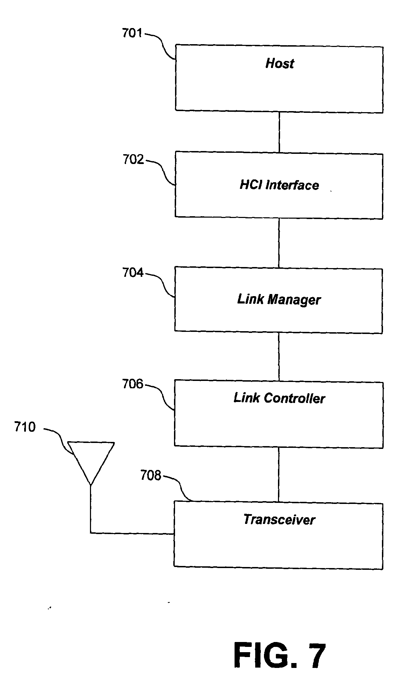

FIG. 7 is a block diagram showing a wireless communications device architecture, which may be used for devices 102 and 104, in accordance with the present invention. This architecture may be employed with the various systems and methods described herein for communicating information. Although this architecture is described in the context of Bluetooth communications, it may be employed with other wireless communications technologies.

The device architecture of FIG. 7 includes a host 701, a host controller interface (HCI) 702, a link manager 704, a link controller 706, a transceiver 708, and an antenna 710.

Host 701 is responsible for functions involving user applications and higher protocol layers. Therefore, host 701 may include a multiplayer game application. Such an application may require information to be transmitted to other players at multiple remote devices. Accordingly, host 701 may rely on the multicasting techniques of the present invention.

Link manager 704 performs functions related to link set-up, security and control. These functions involve discovering corresponding link managers at remote devices and communicating with them according to the link manager protocol (LMP). More particularly, link manager 704 exchanges LMP PDUs with link managers at remote devices.

Link manager 704 exchanges information with host 701 across HCI 702. This information may include commands received from host 701, and information transmitted to host 701. Examples of such commands is host 701 (when in a master device) directing the device to establish a MUG and (when in a slave device) directing the device to join a MUG. HCI 702 defines a set of messages, which provide for such exchanges of information.

Link controller 706 operates as an intermediary between link manager 704 and transceiver 708. Link controller 706 also performs baseband processing for transmissions, such as error correction encoding and decoding. In addition, link controller 706 exchanges data between corresponding link controllers at remote devices according to physical layer protocols. Examples of physical layer protocols include retransmission protocols such as the automatic repeat request (ARQ) protocol. In embodiments, link controller 706 may forward multicast data and/or broadcast data received from slave devices to other slave devices. In addition, link controller 706 may generate data for transmission, such as acknowledgments (ACKs), according to the techniques of the present invention.

Transceiver 708 is coupled to antenna 710. Transceiver 708 includes electronics to (in conjunction with antenna 710) exchange wireless signals with devices. Such electronics include modulators, demodulators, amplifiers, and filters.

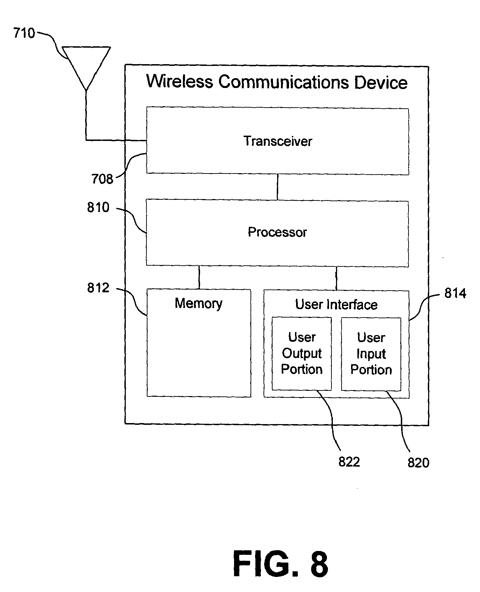

Device architectures, such as the architecture of FIG. 7, may be implemented in hardware, software, firmware, or any combination thereof. One such implementation is shown in FIG. 8. This implementation includes a processor 810, a memory 812, a user interface 814. In addition, the implementation of FIG. 8 includes transceiver 708 and antenna 710.

Processor 810 controls device operation. As shown in FIG. 8, processor 810 is coupled to transceiver 708. Processor 810 may be implemented with one or more microprocessors that are each capable of executing software instructions stored in memory 812.

Memory 812 includes random access memory (RAM), read only memory (ROM), and/or flash memory, and stores information in the form of data and software components (also referred to herein as modules). The data stored by memory 812 may be associated with particular software components.

The software components stored by memory 812 include instructions (also referred to as computer program logic) that can be executed by processor 810. Various types of software components may be stored in memory 812. For instance, memory 812 may store software components that control the operation of transceiver 708. Also, memory 812 may store software components that provide for the functionality of communications host 701, HCI 702, link manager 704, and link controller 706.

As shown in FIG. 8, user interface 814 is also coupled to processor 810. User interface 814 facilitates the exchange of information with a user. FIG. 8 shows that user interface 814 includes a user input portion 820 and a user output portion 822. User input portion 820 may include one or more components that allow a user to input information. Examples of such components include keypads, touch screens, and microphones. User output portion 822 allows a user to receive information from the device. Thus, user output portion 822 may include various components, such as a display, and one or more audio speakers. Exemplary displays include liquid crystal displays (LCDs), and video displays.

The elements shown in FIG. 8 may be coupled according to various techniques. One such technique involves coupling hardware portions 816 and 818, processor 810, memory 812, and user interface 814 through one or more bus interfaces. In addition, each of these components is coupled to a power source, such as a removable and/or rechargeable battery pack (not shown).

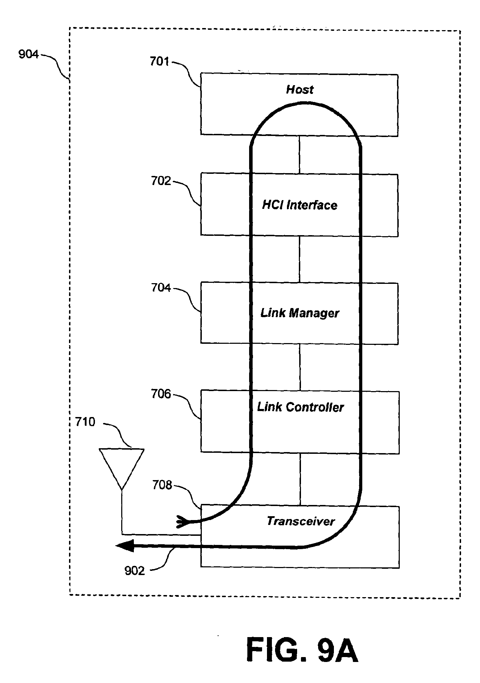

As described above, the direction or forwarding of data to multiple devices (such as multiple slave devices) typically requires forwarding features to be implemented at the application layer. FIG. 9A is a diagram illustrating such an implementation. In FIG. 9A, a data transmission 902 is received from a remote device at a local device 904. Local device 904 is implemented according to the architecture of FIG. 7. Data transmission 902 is designated as either a multicast or broadcast transmission. Accordingly, local device 904 retransmits this transmission. However, because local device 904 employs a conventional implementation, multicasting and broadcasting features require implementation at the application layer within host 701. Accordingly, the retransmission in FIG. 9A of transmission 902 requires considerable processing. This unfortunately increases transmission latencies.

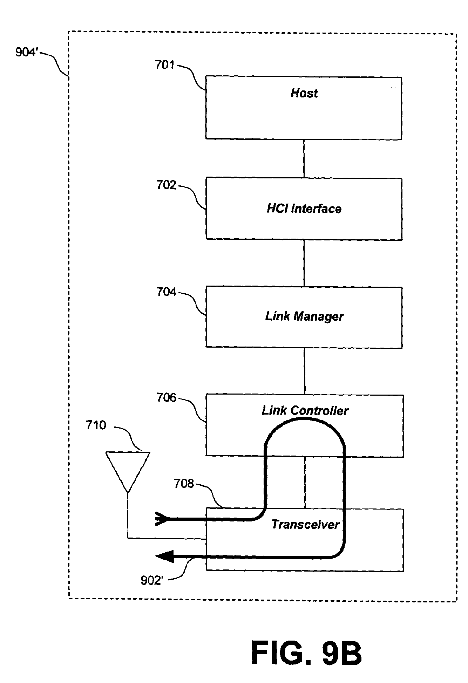

In contrast, FIG. 9B illustrates an implementation that employs techniques of the present invention. As shown in FIG. 9B, a data transmission 902' is received by a local device 904'. Unlike the local device 904, local device 904' only requires processing within transceiver 708 and link controller 706 to effectively retransmit transmission 902'. This advantageously provides for reduced processing and shortened transmission latencies.

In further embodiments of the present invention, the processing in the local device 904' may also include processing at the link manager layer (i.e., by link manager 704).
However, such embodiments also provide significant reductions in processing times and transmission latencies.

### VII. Device Interaction

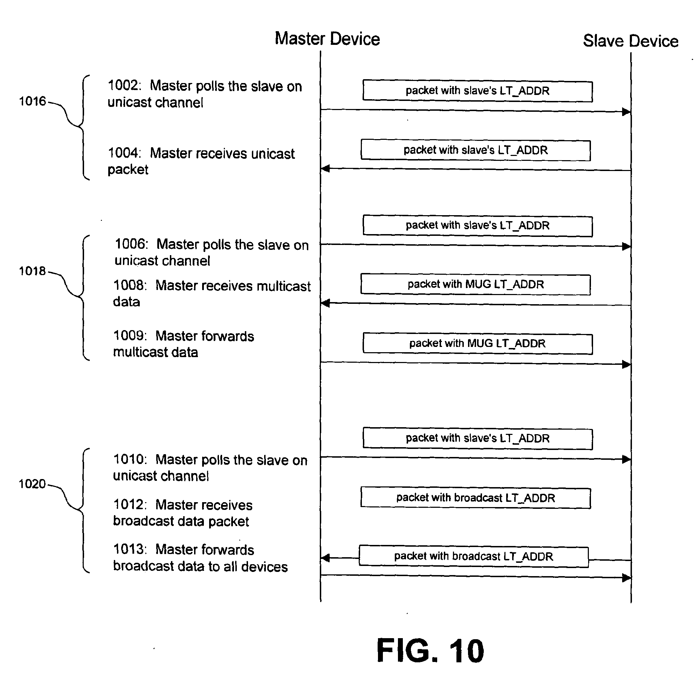

FIG. 10 is a diagram illustrating exemplary interactions between a master device and a slave device according to techniques of the present invention. In particular, FIG. 10 shows three polling scenarios: a first scenario 1016, a second scenario 1018, and a third scenario 1020.

Scenario 1016 involves unicast transmission. Accordingly, this scenario includes a step 1002 in which the master device polls the slave device on a unicast channel by sending a packet with the slave device's LT_ADDR. In response, the slave device sends a unicast packet to the master device in a step 1004. This packet includes the slave device's LT_ADDR as its destination indicator.

Scenario 1018 involves multicast transmission. Thus, this scenario includes a step 1006 in which the master device polls the slave device on a unicast channel by sending a packet with the slave device's LT_ADDR. In response, the slave device sends a packet to the master device in a step 1008. This packet includes a MUG's LT_ADDR as its destination indicator. Accordingly, the master device forwards the multicast packet in a step 1009 for reception for all slave devices in the MUG.

Scenario 1020 involves broadcast transmission. Thus, this scenario includes a step 1010 in which the master device polls the slave device on a unicast channel by sending a packet with the slave device's LT_ADDR. In response, the slave device sends a packet to the master device in a step 1012. This packet includes a broadcast LT_ADDR as its destination indicator. Accordingly, the master device forwards the broadcast packet in a step 1013 for reception by all slave devices in the network.

### VIII. Conclusion

While various embodiments of the present invention have been described above, it should be understood that they have been presented by way of example only, and not in limitation. For instance, although examples have been described involving Bluetooth, other wireless communications systems are within the scope of the present invention.

Accordingly, it will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the following claims and their equivalents.

## Claims

1. A method, comprising:
(a) establishing a short-range wireless communications network, the short-range wireless communications network including multiple slave devices, and a master device configured to control operations of the short-range wireless communications network;
(b) initiating a multicast group, the multicast group including at least two slave devices of the multiple slave devices, wherein an address is reserved for multicast communications within the multicast group;
(c) sending multicast data to the at least two slave devices using the reserved address;
(d) receiving an acknowledgement of received multicast data from at least one slave device of the at least two slave devices, the acknowledgement including an indication that the at least one slave device has data to transmit; and
(e) receiving data from the at least one slave device, wherein said data includes a destination indicator.

2. The method of claim 1, wherein the destination indicator indicates the multicast group, the method further comprising directly sending the data to the at least two slave devices using the reserved address.

3. The method of claim 1, wherein the destination indicator indicates the master device.

4. The method of claim 3, wherein the destination indicator is a Bluetooth logical transport (LT) address of the at least one slave device.

5. The method of claim 1, wherein step (c) comprises sending the multicast data to the at least two slave devices in a single transmission.

6. The method of claim 1, wherein the destination indicator indicates all devices in the short-range wireless communications network, the method further comprising directly sending the received data to the multiple slave devices using an address reserved for broadcast transmissions.

7. The method of claim 1, wherein the multicast group corresponds to a multiplayer game.

8. The method of claim 1, wherein step (e) comprises:
(i) sending a polling message to the at least one slave device in response of receiving the indication that said at least one slave device has data to transmit; and
(ii) receiving a polling response message including the data with the destination indicator.

9. A method in a short-range wireless communications network, wherein the short-range wireless communications network includes multiple slave devices and a master device configured to control operations of the short-range wireless communications network, the method comprising:
(a) receiving a multicast transmission from the master device, the multicast transmission including data and a multicast address corresponding to a multicast group in the short-range wireless communications network, the multicast group including at least two slave devices of the multiple slave devices.
(d) sending in response to the multicast transmission an acknowledgment to the master device, the acknowledgment including an indication that there is data to transmit;
(c) receiving a polling transmission from the master device; and
(d) transmitting to the master device the data indicated in the acknowledgment and a destination indicator.

10. The method of claim 9, wherein the destination indicator indicates all devices in the short-range wireless communications network.

11. The method of claim 9, wherein the destination indicator indicates all devices in the multicast group.

12. The method of claim 9, wherein the multicast group corresponds to a multiplayer game.

13. An apparatus, comprising:
a transceiver configured to communicate with one or more remote devices across a short-range wireless communications network;
a memory;
a processor that executes instructions stored in the memory for:
establishing the short-range wireless communications network, the short-range wireless communications network including multiple slave devices, and a master device configured to control operations of the short-range wireless communications network;
initiating a multicast group, the multicast group including at least two slave devices of the multiple slave devices, wherein an address is reserved for multicast communications within the multicast group;
sending multicast data to the at least two slave devices using the reserved address;
receiving an acknowledgement of received multicast data from at least one slave device of the at least two slave devices, the acknowledgement including an indication that the at least one slave device has data to transmit; and
receiving data from the at least one slave device, wherein said data includes a destination indicator.

14. The apparatus of claim 13, wherein the destination indicator indicates the multicast group, and the processor further executes instructions stored in the memory for directly sending the data to the at least two slave devices using the reserved address.

15. The apparatus of claim 13, wherein the destination indicator indicates all devices in the short-range wireless communications network, and wherein the processor further executes instructions stored in the memory for directly sending the received data to the multiple slave devices using an address reserved for broadcast transmissions.

16. An apparatus, comprising:
a transceiver configured to communicate with one or more remote devices across a short-range wireless communications network;
a memory;
a processor that executes instructions stored in the memory for:
receiving a multicast transmission from a master device, the multicast transmission including data and a multicast address corresponding to a multicast group in the short-range wireless communications network, the multicast group including at least two slave devices;
sending in response to the multicast transmission an acknowledgment to the master device, the acknowledgment including an indication that there is data to transmit;
receiving a polling transmission from the master device; and
transmitting to the master device the data indicated in the acknowledgment and a destination indicator.

17. A computer program product comprising a computer useable medium having computer program logic recorded thereon for enabling a processor in a wireless communications device, the computer program logic comprising:
program code for enabling the processor to establish the short-range wireless communications network, the short-range wireless communications network including multiple slave devices, and a master device configured to control operations of the short-range wireless communications network;
program code for enabling the processor to initiate a multicast group, the multicast group including at least two slave devices of the multiple slave devices, wherein an address is reserved for multicast communications within the multicast group;
program code for enabling the processor to send multicast data to the at least two slave devices using the reserved address;
program code for enabling the processor to receive an acknowledgement of received multicast data from at least one slave device of the at least two slave devices, the acknowledgement including an indication that the at least one device has data to transmit; and
program code for enabling the processor to receive data from the at least one slave device, wherein said data includes a destination indicator.

18. A computer program product comprising a computer useable medium having computer program logic recorded thereon for enabling a processor in a wireless communications device, the computer program logic comprising:
program code for enabling the processor to receive a multicast transmission from a master device, the multicast transmission including data and a multicast address corresponding to a multicast group in the short-range wireless communications network, the multicast group including at least two slave devices.
program code for enabling the processor to send in response to the multicast transmission an acknowledgment to the master device, the acknowledgment including an indication that there is data to transmit;
program code for enabling the processor to receive a polling transmission from the master device; and
program code for enabling the processor to transmit to the master device the data indicated in the acknowledgment and a destination indicator.
